# EUROPÄISCHE PATENTANMELDUNG

(11) **EP 4 815 071 A1**
(43) Veröffentlichungstag der Anmeldung: **30.09.2026**
(21) Anmeldenummer: 26166642.4
(22) Anmeldetag: 23.03.2026
(51) Int. Cl.: H01M 4/86, H01M 4/88

(54) **VERFAHREN ZUR HERSTELLUNG EINER KATALYSATORSCHICHT UND SELBIGE SOWIE BRENNSTOFFZELLENMODUL, -ANORDNUNG, ANTRIEBSEINHEIT UND FAHRZEUG MIT SELBIGER**

(30) Priorität: 27.03.2025 DE 102025111916
(71) Anmelder: Aerostack GmbH, 72581 Dettingen an der Erms (DE)
(72) Erfinder: ALINK, Robert, 72581 Dettingen an der Erms (DE); SOUSA, Nuno, 72581 Dettingen an der Erms (DE)
(74) Vertreter: LKGLOBAL Partnerschaftsgesellschaft mbB

(57) **Zusammenfassung**

Es werden ein Verfahren zur Herstellung von Katalysatorschichten (12a, 12c) für Brennstoffzellenelemente (8) eines Brennstoffzellenmoduls (6), eine katalysatorbeschichtete Membran (12) für Brennstoffzellenelemente (8) eines Brennstoffzellenmoduls (6), eine Brennstoffzellenanordnung (2) mit einem entsprechenden Brennstoffzellenmodul (6), eine Antriebseinheit (4) für ein Fahrzeug (1), insbesondere Luftfahrzeug, mit einer entsprechenden Brennstoffzellenanordnung (6), und ein entsprechendes Fahrzeug (1), insbesondere Luftfahrzeug, vorgeschlagen, wobei das Verfahren folgende Schritte umfasst: Bereitstellen einer Substratstruktur (20) mit Mikroöffnungen (21) und zumindest abschnittsweises Verfüllen der Mikroöffnungen (21) mit einem Katalysatorstoffgemisch (22), das ein lonomer und eine katalytische Komponente umfasst.

## Beschreibung

### Technisches Gebiet

Die vorliegende Offenbarung betrifft ein Verfahren zur Herstellung einer Katalysatorschicht für Brennstoffzellenelemente eines Brennstoffzellenmoduls, eine katalysatorbeschichtete Membran, ein Brennstoffzellenmodul für eine Brennstoffzellenanordnung, eine Brennstoffzellenanordnung für ein Fahrzeug, eine Antriebseinheit für ein Fahrzeug und ein Fahrzeug, insbesondere Luftfahrzeug.

### Technischer Hintergrund

Fahrzeuge mit Brennstoffzellen und entsprechenden Brennstoffzellenmodulen oder -stapeln sind aus dem Stand der Technik bekannt. Beispielsweise enthalten Protonenaustauschmembran-Brennstoffzellen (engl. *Proton Exchange Membrane Fuel Cells* - PEMFC) Bipolarplatten mit Gasflusskanälen (sog. Flussfeldkanäle oder auch Flowfield-Kanäle), die einerseits den Brennstoff als Reduktionsmittel und andererseits in der Regel Luftsauerstoff als Oxidationsmittel über eine Gasdiffusionslage (engl. *Gas Diffusion Layer -* GDL) zu einer Anode bzw. Kathode der Brennstoffzelle führen. Zwischen Anode und Kathode ist eine protonenleitende Membran angeordnet, durch die hindurch aus dem Wasserstoff gewonnene Protonen von Anode zu Kathode wandern, um mittels davon abgeschiedener Elektronen ein nutzbares elektrisches Potential bereitzustellen. Dieser Aufbau einer Brennstoffzelle mit Bipolarplatten, Gasdiffusionslage und protonenleitender Membran wird in Stapelform wiederholt, um die Zellen elektrisch in Reihe zu schalten und somit besagte Brennstoffzellenmodule bzw. -stapel bereitzustellen.

Die protonenleitende katalysatorbeschichtete Membran enthält eine Membran und Katalysatorschichten oder -beschichtungen, die einen Katalysator, typischerweise Platin beinhalten. Der Katalysator kann beispielsweise auf Ruß (engl. *carbon black*) geträgert bzw. gebunden sein. Die Katalysatorschicht ermöglicht als Kernelement die in der Brennstoffzelle ablaufenden elektrochemischen Reaktionen, insbesondere den Protonen-, Gas und Elektronentransport zur Gewinnung elektrischer Energie. Jeweilige Struktur der Katalysatorschicht, die in der Regel ein lonomer und einen auf einem elektrisch leitenden Träger aufgebrachten Katalysator umfasst, bestimmt also verschiedene gleichzeitig ablaufende Transportphänomene und beeinflusst eine Gesamtaktivität bzw. elektrische Leistungsfähigkeit sowie Stabilität und Lebensdauer der Brennstoffzelle.

Katalysatorschichten werden im Allgemeinen durch Formulierung einer Tinte hergestellt, die ein Katalysatorpulver, gelöstes lonomer und Lösungsmittel enthält. Die Tinte wird entweder auf ein Substrat oder direkt auf eine Membran aufgetragen, bevor während eines Trocknungsschritts eine poröse Matrix aus Ionomer, Katalysator und Katalysatorträger gebildet wird. Das lonomer wird zwischen den Katalysatorpartikeln in Form eines mehrere Nanometer dicken Films eingebettet, wodurch eine Ionenleitfähigkeit zwischen den aktiven Stellen in der Katalysatorschicht entsteht.

Alink, Robert; Rajveer Singh; Patrick Schneider; Kläre Christmann, Johannes Schall, Roman Keding, and Nada Zamel; "Full Parametric Study of the Influence of Ionomer Content, Catalyst Loading and Catalyst Type on Oxygen and Ion Transport in PEM Fuel Cell Catalyst Layers", Molecules 25, no. 7: 1523; 2020; https://doi.org/10.3390/molecules25071523; befassen sich mit der Materialentwicklung für Polymerelektrolytmembran-Brennstoffzellen, insbesondere mit der Membran-Elektroden-Einheit, bei der sich gezeigt hat, dass die Strukturierung ihrer verschiedenen Schichten in direktem Zusammenhang mit der Leistungssteigerung steht. Sie untersuchen den Einfluss der verschiedenen Bestandteile in der Kathodenkatalysatorschicht, wie z. B. lonomergehalt, Katalysatorbeladung und Katalysatortyp, auf den Sauerstoff- und Ionentransport mithilfe einer vollständigen parametrischen Analyse. Bei Verwendung von zwei Katalysatortypen, 40 Gew.-% Pt/C und 60 Gew.-% Pt/C mit Kohlenstoff mit hoher Oberfläche, wurde der lonomer/Kohlenstoff-Gehalt zwischen 0,29 und 1,67 variiert, während die Pt-Beladung im Bereich von 0,05 bis 0,8 mg cm-2 variiert wurde. Es wurde festgestellt, dass der optimale lonomergehalt vom Betriebspunkt und -zustand sowie von der Katalysatorbeladung und -art abhängt.

Auch für Fahrzeuge, inklusive Luftfahrzeuge, werden derzeit alternative Antriebe auf Wasserstoffbasis entwickelt, um fossile Brennstoffe zu ersetzen und deren Auswirkungen auf die Umwelt zu vermeiden. Brennstoffzellen in Fahrzeugen, wie beispielsweise Flugzeugen, können Wasserstoff für ihren Antrieb und zur Stromerzeugung in Hilfskrafterzeugern (engl. *Auxiliary Power Units -* APUs) ersetzen. Insbesondere in der Verwendung von Wasserstoff wird ein Weg zu einer umweltfreundlichen und nachhaltigen Luftfahrt gesehen, weil dadurch eine Freisetzung von Kohlendioxid oder andere kohlenwasserstoffbezogene Emissionen vermieden werden können.

US 7 837 819 B2 betrifft ein Verfahren zur Herstellung einer Membran-Elektroden-Einheit (engl. *membrane-electrode-assembly-* MEA) für eine Brennstoffzelle, bei dem ein Bindemittel auf die Oberfläche eines Polymerfilms aufgesprüht wird, eine Katalysatoraufschlämmung mittels Stabbeschichtung auf die Oberfläche einer Elektrolytmembran aufgebracht und an das Bindemittel gebunden wird, um eine Katalysatorelektrodenschicht zu bilden, eine gebundene Einheit aus der Elektrolytmembran und der Katalysatorelektrodenschicht nach einem Trocknungsprozess vom Polymerfilm getrennt wird, um eine zweischichtige MEA zu erhalten, und die so erhaltenen zweischichtigen MEAs verwendet werden, um durch einen Heißpressprozess eine dreischichtige MEA oder eine fünfschichtige MEA zu bilden. Dementsprechend soll ein Verlust an Katalysator gemindert werden, da die Katalysatoraufschlämmung direkt auf die Membran aufgesprüht wird und die Katalysatorelektrodenschicht in einer festen Phase auf beide Oberflächen der Membran heißgepresst wird.

DE10 2006 002470 A1 beschreibt ein Brennstoffzellensystem für die Versorgung eines Fahrzeugs mit Trinkwasser und Sauerstoff, welches Brennstoffzellensystem eine Brennstoffzelle und eine Elektrolysezelle mit Luftkathode aufweist. Ferner ist die Elektrolysezelle mit der Brennstoffzelle gekoppelt und die Brennstoffzelle und die Elektrolysezelle sind derart eingerichtet, dass ein Leistungsbedarf der Elektrolysezelle durch eine Leistungsabgabe der Brennstoffzelle vollständig abgedeckt wird.

Bei aus dem Stand der Technik bekannten Brennstoffzellenanordnung besteht Verbesserungspotential bei der Gewichtseinsparung und Verkleinerung bzw. Erhörung ihrer gravimetrischen Leistungsdichte: Um dies zu erreichen, kann die elektrische Stromdichte der einzelnen Brennstoffzellelemente gesteigert werden. Ein Problem besteht darin, dass mit zunehmender Dicke der Katalysatorschicht die Verluste beim Massentransport und Ladungstransport über die Dicke der Katalysatorschichten hinweg erheblich zunehmen.

Generell zeigt sich eine steigende Leistungsfähigkeit und Effizienz der Brennstoffzelle durch das Hinzufügen von Katalysatormaterial Allerdings steigt die Stromdichte nicht mehr über eine Katalysator-Beladungsschwelle der Katalysatorschichten von etwa 0,4 mg Platin pro cm² hinaus an. Ab diesem Punkt können Protonen nicht mehr effizient in Regionen mit Abständen von mehr als 10 µm zur Polymermembran transportiert werden. In der Regel steigt also die Leistung der Brennstoffzelle nicht wesentlich über eine Katalysatorbeladung von 0,4 mg cm-2 hinaus an, was einer Dicke von etwa 10 µm entspricht. Um die Protonenleitfähigkeit zu verbessern, kann einem Katalysatorstoffgemisch, beispielsweise einer Katalysatortinte, zwar ein höherer lonomergehalt hinzugefügt werden, jedoch blockiert dieser wiederum den Sauerstofftransport, indem er eine lonomerfilmdicke in der Nähe der Katalysatorpartikel erhöht, und limitiert dadurch den Brennstoffumsatz und somit die Stromdichte. Ein wichtiger Optimierungsparameter von Katalysatorschichten besteht daher im Ausgleich zwischen Sauerstoff- und Protonentransportverlusten durch Anpassung des lonomergehalts in den Katalysatorschichten.

### Beschreibung

Es kann als Aufgabe betrachtet werden, Brennstoffzellenmodule mit möglichst geringem Gewicht und/oder Platzbedarf bzw. möglichst hoher gravimetrischer Leistungsdichte, bereitzustellen, ohne dabei ihre Fertigungs- und Betriebseigenschaften zu beeinträchtigen. Insbesondere kann es als Aufgabe betrachtet werden, Brennstoffzellenmodule mit möglichst hoher Stromdichte bereitzustellen. Diese Aufgabe wird durch den Gegenstand des unabhängigen Anspruchs 1 sowie der nebengeordneten Ansprüche 7, 8, 9 und 10 gelöst.

Weitere Ausführungsformen ergeben sich aus den abhängigen Ansprüchen sowie aus der folgenden Beschreibung. Dabei in Bezug auf Verfahren zur Bereitstellung von Brennstoffzellenmodulen beschriebenen Merkmale sowie entsprechende Verfahrensschritte können als Vorrichtungsmerkmale implementiert werden oder umgekehrt. Im Zusammenhang mit dem Verfahren stehende Abschnitte der Beschreibung gelten also in analoger Weise auch für eine Herstellungsvorrichtung für Katalysatorbeschichtungen, -schichten und/oder katalysatorbeschichtete Membranen bzw. Brennstoffzellenmodule sowie Computerprogramme zu deren Steuerung. Insbesondere können Verfahrensschritte und damit zusammenhängend erwähnte Komponenten als Funktionen einer Herstellungsvorrichtung sowie entsprechenden Computerprogramme implementiert sein und beliebige Funktionen der Herstellungsvorrichtung können als Verfahrensschritte implementiert werden.

Insbesondere wird die Aufgabe gelöst durch ein Verfahren zur Herstellung einer Katalysatorschicht für Brennstoffzellenelemente eines Brennstoffzellenmoduls, umfassend folgende Schritte: Bereitstellen einer Substratstruktur mit Mikroöffnungen und zumindest abschnittsweises Verfüllen der Mikroöffnungen mit einem Katalysatorstoffgemisch, das ein lonomer und eine katalytische Komponente umfasst.

Bei einer katalysatorbeschichteten Membran für Brennstoffzellenelemente eines Brennstoffzellenmoduls wird die Aufgabe dadurch gelöst gekennzeichnet, dass die katalysatorbeschichtete Membran zumindest abschnittsweise mit einer mit einem entsprechenden Verfahren hergestellten Katalysatorschicht versehen ist bzw. eine solche umfasst.

Bei einem Brennstoffzellenmodul für eine Brennstoffzellenanordnung, mit wenigstens einem Brennstoffzellenelement, wird die Aufgabe dadurch gelöst, dass das wenigstens eine Brennstoffzellenelement eine entsprechende Katalysatorschicht und/oder katalysatorbeschichtete Membran umfasst.

Bei einem Brennstoffzellenanordnung für ein Fahrzeug, insbesondere Luftfahrzeug, wird die Aufgabe dadurch gelöst, dass die Brennstoffzellenanordnung wenigstens ein entsprechendes Brennstoffzellenmodul umfasst.

Bei einer Antriebseinheit für ein Fahrzeug, insbesondere Luftfahrzeug, wird die Aufgabe dadurch gelöst, dass die Antriebseinheit wenigstens eine entsprechende Brennstoffzellenanordnung umfasst.

Bei einem Fahrzeug, insbesondere Luftfahrzeug wird die Aufgabe durch ein entsprechendes Brennstoffzellenmodul und/oder eine entsprechende Antriebseinheit gelöst.

Durch die erfindungsgemäße Lösung werden also Katalysatorschichten und/oder - beschichtungen für katalysatorbeschichtete Membranen sowie möglicherweise andere Schichten von Brennstoffzellen, beispielsweise Gasdiffusionslagen mit Katalysatorschichten oder Gasdiffusionselektroden, auf Basis von Substratstrukturen mit Mikroöffnungen bereitgestellt, die mit dem Katalysatorgemisch (Katalysator und Ionomer) gefüllt sind. Die Substratstruktur stellt Freiräume bereit, die sich einzeln oder in der Gesamtheit von einer zur anderen Seite der Substratstruktur bzw. der daraus gebildeten Katalysatorschicht erstrecken können. Eine Anordnung des Katalysatorgemisches in den Freiräumen ermöglicht eine Trennung des Protonentransports über kurze Strecken über eine Art lonomerfilm in der Nähe von Katalysatorpartikeln und über lange Strecken durch die Erzeugung von Protonenleitkanälen, die wie "Protonentransport-Autobahnen" welche die Protonen ähnlich wie bei den Kapillareffekt bestenfalls durch die gesamte Dicke der Katalysatorschicht effizient hindurch transportieren.

Eine derartige Lösung hilft also, den Stoffaustausch, insbesondere den Transport von Protonen durch die Katalysatorschicht hindurch, zu verbessern. Somit lassen sich insbesondere effiziente Katalysatorschichten mit relativ hoher Dicke bereitstellen, welche eine deutlich erhöhte Effizienz aufweisen. Dadurch lässt sich der Brennstoffumsatz und somit wiederum die Stromdichte in den einzelnen Brennstoffzellenelementen erhöhen, was letztendlich zu einer Erhöhung der gravimetrischen Leistungsdichte der Brennstoffzellenmodule führt. Die Lösung hat eine Vielzahl von Vorteilen gegenüber dem Stand der Technik, indem sie eine reproduzierbare Fertigung von Brennstoffzellenmodulen mit hoher gravimetrischer Leistungsdichte und stabilen Betriebseigenschaften ermöglicht.

Gemäß einer Ausführungsform kann vorgesehen sein, dass die Mikroöffnungen zumindest abschnittsweise als längliche Pfade ausgeformt sind, die sich im Wesentlichen senkrecht zu einer flächigen Ausdehnungsebene der Substratstruktur durch diese hindurch erstrecken. Mit anderen Worten ist eine Anordnung der Protonenleitenden "Protonentransport-Autobahnen" in Richtung der Dicke der Katalysatorschicht vorteilhaft. Derartige längliche Pfade können durch eine poröse und/oder fibröse Struktur ausgebildet werden, in der das Katalysatorgemisch aufgenommen ist. Alternativ oder zusätzlich können die Pfade zumindest abschnittsweise als Kapillaren ausgeformt sein. Somit lassen sich im Wesentlichen senkrecht zur Membran ausgerichtete Protonenpfade erreichen, welche einen effizienten Transport der Protonen von der Membran zu den katalytisch aktiven Zentren ermöglichen. Die porösen und/oder fibrösen Strukturen können derart ausgestaltet sein, dass eine effektive Protonenleitung erreicht wird, ohne übermäßig viel Volumen für die katalytisch aktive Komponente zu belegen.

Gemäß einer Ausführungsform kann vorgesehen sein, dass die Mikroöffnungen zumindest abschnittweise als Poren ausgebildet sind. Derartige Poren können mit katalytisch aktivem material gefüllt sein, als effektive Gastransportpfade und/oder als Öffnungen zu den Protonenleitkanälen dienen bzw. diese zumindest abschnittsweise ausbilden. Dies hilft, den Protonen- und Gastransport durch die Katalysatorschichten hindurch weiter zu verbessern.

Gemäß einer Ausführungsform kann vorgesehen sein, dass eine Schichtstärke der Substratstruktur zwischen 5 und 100 µm und/oder ein Öffnungsdurchmesser der Mikroöffnungen zwischen 1 und 30 µm beträgt. Die Substratstruktur kann also als Strukturelement einer Katalysatorschicht mit entsprechender Schichtstärke bereitgestellt werden. Die Mikroöffnung mit entsprechendem Öffnungsdurchmesser ermöglichen eine Aufnahme des Katalysatorwischgemisches in der Substratstruktur.

Gemäß einer Ausführungsform kann vorgesehen sein, dass ein Volumenverhältnis zwischen der Substratstruktur und den Mikroöffnungen zwischen 10 und 95%, beispielsweise zwischen 40 und 90% beträgt. Auf diesem Wege lässt lassen sich Ionomer- und Katalysatorgehalt der Katalysatorschicht optimieren und somit Sauerstoff- sowie Protonentransportverluste durch die Katalysatorschicht hindurch minimieren. Dadurch lassen sich Brennstoffumsatz und somit die Stromdichte in den einzelnen Brennstoffzellenelementen weiter erhöhen, was zu einer Erhöhung der gravimetrischen Leistungsdichte der Brennstoffzellenmodule führt.

### Kurze Beschreibung der Figuren

Nachfolgend werden anhand der beigefügten Zeichnungen einige Details näher beschrieben. Die Darstellungen sind schematisch und nicht maßstabsgetreu. Gleiche Bezugszeichen beziehen sich auf gleiche oder ähnliche Elemente. Es zeigen:
- Fig. 1: eine schematische Draufsicht eines Ausführungsbeispiels eines Fahrzeugs in Form eines Luftfahrzeugs; und
- Fig. 2: eine schematische Vorderansicht eines Ausführungsbeispiels eines Brennstoffzellenmoduls des in Fig. 1 gezeigten Fahrzeugs.
- Fig. 3: eine schematische Vorderansicht eines Ausführungsbeispiels einer katalysatorbeschichteten Membran eines Brennstoffzellenelements des in Fig. 2 gezeigten Brennstoffzellenmoduls.
- Fig. 4: eine schematische Vorderansicht eines in Fig. 3 eingezeichneten Details III eines Ausführungsbeispiels einer Katalysatorschicht der katalysatorbeschichteten Membran.
- Fig. 5: eine schematische Vorderansicht eines in Fig. 3 eingezeichneten Details III eines weiteren Ausführungsbeispiels einer Katalysatorschicht der katalysatorbeschichteten Membran.
- Fig. 6: eine schematische Abfolge möglicher Schritte eines Verfahrens zur Herstellung einer Katalysatorschicht der katalysatorbeschichteten Membran.

### Detaillierte Beschreibung

Die folgende detaillierte Beschreibung ist lediglich beispielhafter Natur und soll die Erfindung und deren Verwendungsmöglichkeiten nicht einschränken. Darüber hinaus besteht keine Absicht, sich an im vorstehenden Hintergrund oder in folgender detaillierter Beschreibung Dargelegtes zu binden. Die Darstellungen und Abbildungen in den Zeichnungen sind schematisch und nicht maßstabsgetreu. Gleiche Elemente sind in der Regel gleich bezeichnet und mit gleichen Bezugszeichen versehen. Ein verbessertes Verständnis des beschriebenen Gegenstands kann durch eine Zusammenschau der Abbildungen und ihrer detaillierten Beschreibung erlangt werden.

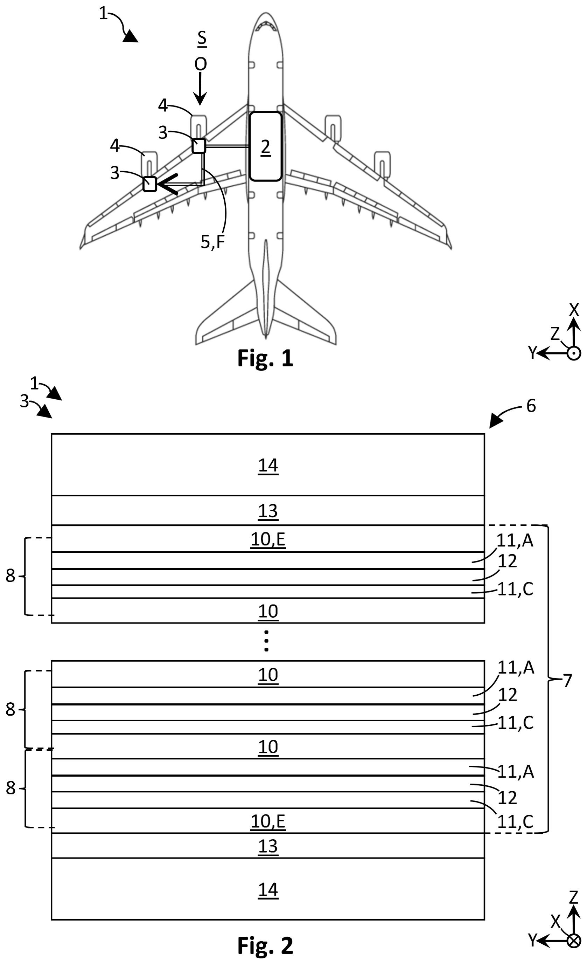

Fig. 1 zeigt eine schematische Draufsicht eines Ausführungsbeispiels eines Fahrzeugs 1 in Form eines Luftfahrzeugs. Das Fahrzeug 1 umfasst ein Brennstoffreservoir 2, Brennstoffzellenanordnungen 3 und Antriebseinheiten 4. Vom Brennstoffreservoir 2, beispielsweise einem Tank, wird ein Reduktionsgas F bzw. Brennstoff, wie beispielsweise Wasserstoff, über Gasleitungen 5 zu den Brennstoffzellenanordnungen 3 geliefert, die bei der Umwandlung des Reduktionsgases F mit einem Oxidationsgas O, wie beispielsweise aus der das Fahrzeug umgebenden Atmosphäre S entnommener Luft, elektrische Energie erzeugen, die wiederum den Antriebseinheiten 4 zum Antrieb des Fahrzeugs bereitgestellt wird. Das Fahrzeug 1 erstreckt sich in einer Längsrichtung X, Querrichtung Y und Höhenrichtung Z, die gemeinsam ein kartesisches Koordinatensystem aufspannen.

Fig. 2 zeigt eine schematische Vorderansicht eines Brennstoffzellenmoduls 6 des in Fig. 1 gezeigten Fahrzeugs 1. Als Teil der Brennstoffzellenanordnungen 3 umfasst das Brennstoffzellenmodul 6 eine Zellreihengruppierung 7, auch genannt Zellstapel (engl. *Cell Row Assembly -* CRA), die eine Reihe von Brennstoffzellenelementen 8 bzw. einzelne Zellanordnungen umfasst. Jedes Brennstoffzellenelement 8 umfasst eine Bipolarplatte 10, zwei Gasdiffusionslagen 11 und eine katalysatorbeschichtete Membran 12.

Die Bipolarplatten 10 sind jeweils zwischen den zwei Gasdiffusionslagen 11 aufgenommen, nämlich einer anodenseitigen A Gasdiffusionslage 11 und einer kathodenseitigen C Gasdiffusionslage 11. Zwischen den Gasdiffusionslagen 11 zweier aneinander angrenzender Brennstoffzellenelemente 8 ist im vorliegenden Ausführungsbeispiel die katalysatorbeschichtete Membran 12 beispielsweise in Form einer Membran mit Katalysator- und lonomerbeschichtung (engl. *Catalyst Coded Membrane -* CCM) angeordnet. Jeweils eine Abschlussseite E ausbildende Bipolarplatte 10 bzw. Abschlussplatte schließt die Zellreihengruppierung 7 ab.

Stromsammler 13 des Brennstoffzellenmoduls 6 liegen außen an den abschlussseitigen E Bipolarplatten 10 an, um von der Zellreihengruppierung 7 bei der Umwandlung des Reduktionsgas F und des Oxidationsgases O erzeugten elektrischen Strom abzunehmen. An den Stromsammlern 13 liegt wiederum jeweils eine Endplatte 14 des Brennstoffzellenmoduls 6 außen an, welche die Zellreihengruppierung 7 nach außen elektrisch isoliert. Die Zellreihengruppierung 7 umfasst also in der Regel eine den jeweiligen Anforderungen entsprechende Anzahl von Brennstoffzellenelementen 8 mit Bipolarplatten 10, Gasdiffusionslagen 11 und katalysatorbeschichtete Membranen 12, wobei die Anzahl von Zellreihengruppierungen 7 beispielsweise 300 bis 500, beispielsweise ca. 400 betragen kann, um durch entsprechende Spannungsaddition eine benötigte elektrische Gesamtspannung bereitzustellen.

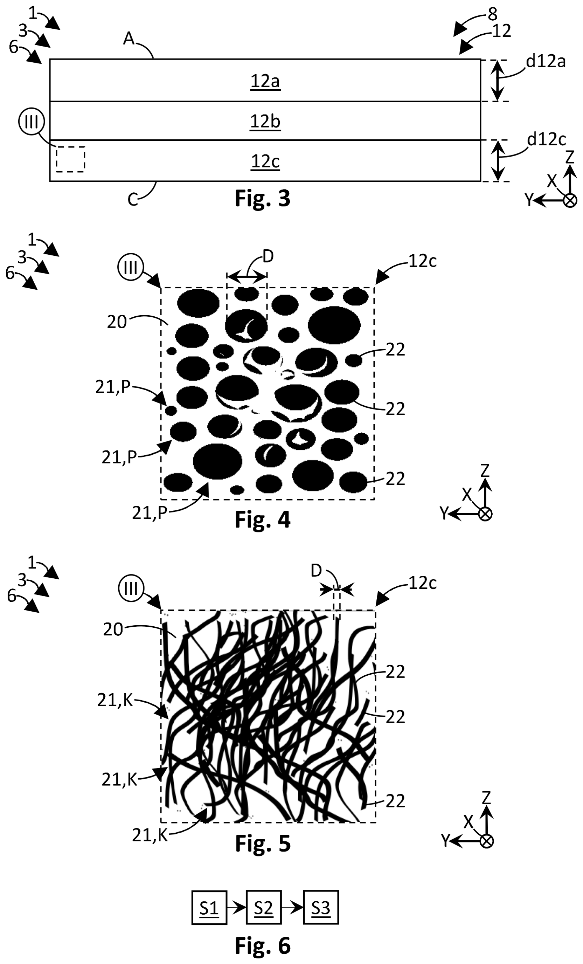

Fig. 3 zeigt eine schematische Vorderansicht eines Ausführungsbeispiels einer der katalysatorbeschichtete Membranen 12 eines der Brennstoffzellenelemente 8 des in Fig. 2 gezeigten Brennstoffzellenmoduls 6. die katalysatorbeschichtete Membran 12 umfasst eine anodenseitige A Katalysatorschicht 12a, eine Membran 12b, wie z.B. eine Polymerelektrolytmembran (PEM), beispielsweise aus einem Ionomer, wie Nafion oder ähnlichem, und kathodenseitige Katalysatorschicht 12c. Die Katalysatorschichten 12a, 12c können beispielsweise eine jeweils im Wesentlichen parallel zur Höhenrichtung Z gemessene anodenseitige A Schichtdicke d12a bzw. eine kathodenseitige Schichtdicke 12b von 5 bis 100 µm aufweisen.

Fig. 4 zeigt eine schematische Vorderansicht eines in Fig. 3 eingezeichneten Details III eines Ausführungsbeispiels einer kathodenseitigen C Katalysatorschicht 12c der katalysatorbeschichteten Membran 12, wobei es sich hier auch um eine Querschnittsansicht handeln kann. Die Katalysatorschicht beinhaltet eine Substratstruktur 20, die Mikroöffnungen 21 aufweist, hier beispielsweise in Form von Poren P, die in Verbindung miteinander Pfade ausbilden können, welche die Katalysatorschicht 12c im Wesentlichen entlang der Höhenrichtung Z durchdringen. Die Mikroöffnungen 21 sind mit einem Katalysatorgemisch 22 gefüllt, das ein Inonomer und eine katalytische Komponente, beispielsweise Platin, umfasst, und können einen Öffnungsdurchmesser D von 1 bis 30 µm aufweisen.

Fig. 5 zeigt eine schematische Vorderansicht eines in Fig. 3 eingezeichneten Details III eines weiteren Ausführungsbeispiels einer kathodenseitigen Katalysatorschicht 12c der katalysatorbeschichteten Membran 12, wobei sich hier auch um eine Querschnittsansicht handeln kann. Die Substratstruktur 20 besitzt Mikroöffnungen 21, hier beispielsweise in Form von Kapillaren K und/oder Zwischenräumen, die zwischen Faserelementen ausgebildet sein können, und die in Pfade aus bilden können, welche die Katalysatorschicht 12c im Wesentlichen entlang der Höhenrichtung Z durchdringen. Die Mikroöffnungen 21 sind mit dem Katalysatorgemisch 22 gefüllt, das ein Inonomer und eine katalytische Komponente, beispielsweise Platin, umfasst, und können einen Öffnungsdurchmesser D von 1 bis 30 µm aufweisen.

Fig. 6 zeigt ein eine schematische Abfolge möglicher Schritte eines Verfahrens zur Herstellung einer Katalysatorschicht 12a, 12c, beispielsweise für die katalysatorbeschichtete Membran 12. In einem ersten Schritt S1 kann die Substratstruktur 20 mit den Mikroöffnungen 21 bereitgestellt werden, beispielsweise als poröse relativ starre lonomerstruktur, die auf verschiedene Weise erzeugt werden kann, z.B. durch Elektrospinnen, Gießen mit Porenfüllern, als eine Membran mit hoher Rauheit, großer Oberfläche, usw. In einem zweiten Schritt S2 kann die Substratstruktur 20 samt Mikroöffnungen 21 mit dem Katalysatorgemisch 22 versehen, insbesondere gefüllt und/oder beschichtet werden, beispielsweise mit einer Katalysatortinte, die einen Katalysator in Dispersion mit Ionomer und verschiedenen Lösungsmitteln wie Alkoholen oder Wasser umfasst.

In einem dritten Schritt S3 kann die gefüllte und/oder beschichtete Substratstruktur 20 getrocknet werden. Dabei kann der Katalysator bzw. die katalytische Komponente mechanisch und protonisch mit der Substratstruktur 20, beispielsweise einer porösen lonomerstruktur, verbunden werden. Somit ist eine Katalysatorschicht 12a, 12c bereitstellbar, die ein mesoskopisches lonomer-Netzwerk (poröses Netzwerk) enthält, in das eine Katalysatorschicht mit einer den jeweiligen Anforderungen entsprechenden Zusammensetzung zumindest abschnittsweise eingebettet ist, beispielsweise in Form eines getragenen Katalysators mit mikroskopischen lonomerstrukturen. Die Schritte S1 bis S3 können bei Bedarf wiederholt werden, um den Füllgrad der porösen Struktur mit dem Katalysatorgemisch 22 nach dem Trocknen weiter zu erhöhen.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Fahrzeug / Luftfahrzeug
- 2: Brennstoffreservoir / Tank
- 3: Brennstoffzellenanordnung
- 4: Antriebseinheit
- 5: Brennstoffleitung
- 6: Brennstoffzellenmodul
- 7: Zellenreihengruppierung
- 8: Brennstoffzellenelement / Zellanordnung

- 10: Bipolarplatte
- 11: Gasdiffusionslage
- 12: katalysatorbeschichtete Membran / Membran-Katalysatorschicht-Einheit
- 12a: Anodenseitige Katalysatorschicht
- 12b: Membran
- 12c: Kathodenseitige Katalysatorschicht
- 13: Stromsammler
- 14: Endplatte

- 20: Substratstruktur
- 21: Mikroöffnungen
- 22: Katalysatorgemisch
- d₁₂ₐ: Schichtdicke anodenseitige Katalysatorschicht
- d_{12b}: Schichtdicke kathodenseitige Katalysatorschicht

- A: Anodenseite
- C: Kathodenseite
- D: Öffnungsdurchmesser Mikroöffnungen
- E: Abschlussseite/Abschlussplatte
- F: Reduktionsgas / Brennstoff
- K: Kapillare
- O: Oxidationsgas
- P: Pore
- S: Atmosphäre/Umgebung
- X: Längsrichtung
- Y: Querrichtung
- Z: Höhenrichtung

- S1: Bereitstellen Substratstruktur
- S2: Anwendung Katalysatorgemisch
- S3: Trocknen

## Patentansprüche

1. Verfahren zur Herstellung einer Katalysatorschicht (12a, 12c) für Brennstoffzellenelemente (8) eines Brennstoffzellenmoduls (6), umfassend folgende Schritte:
- Bereitstellen einer Substratstruktur (20) mit Mikroöffnungen (21) und
- zumindest abschnittsweises Verfüllen der Mikroöffnungen (21) mit einem Katalysatorstoffgemisch (22), das ein lonomer und eine katalytische Komponente umfasst.

2. Verfahren nach Anspruch 1, **dadurch gekennzeichnet, dass** die Mikroöffnungen (21) zumindest abschnittsweise als längliche Pfade ausgeformt sind, die sich im Wesentlichen senkrecht zu einer flächigen Ausdehnungsebene der Substratstruktur (20) durch diese hindurch erstrecken.

3. Verfahren nach Anspruch 1 oder 2, **dadurch gekennzeichnet, dass** die Mikroöffnungen (21) zumindest abschnittweise als Poren (P) ausgebildet sind.

4. Verfahren nach wenigstens einem der oben genannten Ansprüche, **dadurch gekennzeichnet, dass** eine Schichtstärke der Substratstruktur (20) zwischen 5 und 100 µm und/oder ein Öffnungsdurchmesser der Mikroöffnungen zwischen 1 und 30 µm beträgt.

5. Verfahren nach wenigstens einem der oben genannten Ansprüche, **dadurch gekennzeichnet, dass** ein Volumenverhältnis zwischen der Substratstruktur (20) und den Mikroöffnungen (21) zwischen 40 und 90% beträgt.

6. Katalysatorbeschichtete Membran (12) für Brennstoffzellenelemente (8) eines Brennstoffzellenmoduls (6), **dadurch gekennzeichnet, dass** die katalysatorbeschichtete Membran (12) eine zumindest abschnittsweise mit einem Verfahren nach wenigstens einem der Ansprüche 1 bis 5 hergestellte Katalysatorschicht (12a, 12c) umfasst.

7. Brennstoffzellenmodul (6) für eine Brennstoffzellenanordnung (2), mit wenigstens einem Brennstoffzellenelement (8), **dadurch gekennzeichnet, dass** das wenigstens eine Brennstoffzellenelement (8) eine zumindest abschnittsweise mit einem Verfahren nach wenigstens einem der Ansprüche 1 bis 5 hergestellte Katalysatorschicht (12a, 12c) und/oder eine Katalysatorbeschichtete Membran (12) nach Anspruch 6 umfasst.

8. Brennstoffzellenanordnung (2) für ein Fahrzeug (1), insbesondere Luftfahrzeug, **dadurch gekennzeichnet, dass** die Brennstoffzellenanordnung (6) wenigstens ein Brennstoffzellenmodul (6) nach wenigstens einem der Ansprüche 1 bis 7 umfasst.

9. Antriebseinheit (4) für ein Fahrzeug (1), insbesondere Luftfahrzeug, **dadurch gekennzeichnet, dass** die Antriebseinheit (4) wenigstens eine Brennstoffzellenanordnung (5) nach Anspruch 8 umfasst.

10. Fahrzeug (1), insbesondere Luftfahrzeug, **gekennzeichnet durch** wenigstens eine Brennstoffzellenanordnung (2) nach Anspruch 8 und/oder eine Antriebseinheit (4) nach Anspruch 9.
